# EUROPÄISCHE PATENTSCHRIFT

(11) **EP 3 720 707 B1**
(45) Veröffentlichungstag und Bekanntmachung des Hinweises auf die Patenterteilung: **09.10.2024**
(21) Anmeldenummer: 19812976.9
(22) Anmeldetag: 28.11.2019
(51) Int. Cl.: B32B 27/08, B32B 27/32, B65D 65/40

(54) **KUNSTSTOFFFOLIENVERBUND, KUNSTSTOFFVERPACKUNG SOWIE VERFAHREN ZUR HERSTELLUNG EINES KUNSTSTOFFFOLIENVERBUNDES**
PLASTIC FILM COMPOSITE, PLASTIC PACKAGING AND METHOD FOR PRODUCING A PLASTIC FILM COMPOSITE
FILM COMPLEXE DE PLASTIQUE, EMBALLAGE PLASTIQUE ET PROCÉDÉ DE FABRICATION D'UN FILM COMPLEXE DE PLASTIQUE

(30) Priorität: 14.12.2018 DE 102018132343
(43) Veröffentlichungstag der Anmeldung: 14.10.2020
(73) Patentinhaber: Mondi AG, 1030 Wien (AT)
(72) Erfinder: OBERMANN, Uwe, 48599 Gronau (DE); SEIFERT, Ulf, 48607 Ochtrup (DE)
(74) Vertreter: Andrejewski - Honke Patent- und Rechtsanwälte Partnerschaft mbB
(86) Internationale Anmeldenummer: PCT/EP2019/082842
(87) Internationale Veröffentlichungsnummer: WO 2020/120146

(56) Entgegenhaltungen:
- EP-A1- 2 100 724
- WO-A1-97/03822
- DE-A1- 102011 001 336

## Beschreibung

Die Erfindung betrifft einen Kunststofffolienverbund für Folienverpackungen mit einer ersten Oberfläche und einer zweiten Oberfläche, einer monoaxial orientierten Polyethylen-Folie und mit einer Siegelschicht an der zweiten Oberfläche. Gegenstand der Erfindung sind des Weiteren auch eine aus dem Kunststofffolien-Verbund gebildete Folienverpackung sowie ein Verfahren zur Herstellung des Kunststofffolienverbundes.

Aus der Praxis sind verschiedene Kunststofffolienverpackungsverbunde bekannt, deren Schichtenfolge im Hinblick auf die Herstellung der Folienverpackung als auch das Erscheinungsbild der Folienverpackung optimiert sind.

Um eine gute Heißsiegelbarkeit sowie ein hochwertiges Erscheinungsbild eines Folienverpackungsbeutels zu erreichen, wird - wie auch in der EP 2 186 741 B1 beschrieben - häufig Polyethylenterephthalat (PET) für die Außenfolie und Polyethylen für eine als Innenfolie vorgesehene Siegelfolie eingesetzt. Bei dieser in der Praxis üblichen Ausführung ergibt sich jedoch der Nachteil, dass ein sortenreines Recycling des Seitenfaltenbeutels nicht möglich ist.

Ein im Wesentlichen sortenrein aus Polyethylen gebildeter Seitenfaltenbeutel sowie ein Verfahren zur Herstellung sind aus EP 2 987 744 B1 bekannt. Bei den gattungsgemäßen Kunststofffolienverbunden werden gemäß einer bevorzugten Ausgestaltung eine monoaxial orientierte Außenfolie und eine Siegelfolie zunächst getrennt gefertigt und dann durch einen Zwei-Komponenten-Klebstoff auf der Basis von Polyurethan verklebt.

Folien aus monoaxial orientiertem Polyethylen und insbesondere monoaxial orientiertem Polyethylen hoher Dichte zeichnen sich durch eine relativ hohe Steifigkeit, gute optische Eigenschaften und zumindest in Richtung der Orientierung auch durch eine hohe Zugfestigkeit aus.

Die mechanischen Eigenschaften sind durch die monoaxiale Orientierung jedoch stark anisotrop. Gerade quer zur Orientierungsrichtung ergibt sich eine vergleichsweise geringe Zugfestigkeit, weshalb monoaxial orientierte Folien in der Regel eine lineare Rissausbreitung entlang der Orientierungsrichtung aufweisen und insgesamt nur eine geringe Durchstoßfestigkeit und Knickbeständigkeit aufweisen. Gerade bei einem entlang der Orientierungsrichtung verlaufenden Knick besteht dabei eine erhöhte Gefahr eines Einreißens bzw. eines Zerreißens, wobei sich dann ein solcher Einriss auch leicht entlang der Orientierungsrichtung ausbreiten kann.

Das anisotrope mechanische Verhalten von monoaxial orientierten Polyethylen-Folien ist bekannt. So werden beispielsweise Bändchengewebe aus entlang ihrer Längsrichtung orientierten Folienstreifen gebildet, wobei durch die kreuzende Anordnung in dem Gewebe insgesamt hohe Festigkeiten erzeugt werden können.

Grundsätzlich ist es auch möglich, zwei monoaxial orientierten Polyethylen-Folien mit senkrecht zueinander angeordneter Orientierungsrichtung zu kaschieren. Eine entsprechende mehrschichtige Polyethylen-Folie zur Herstellung von flexiblen Verpackungsbehältnissen ist aus DE 92 10 530 U1 bekannt. Zur Herstellung wird eine Blasfolie auf der Basis von Polyethylen zunächst extrudiert und abgekühlt, bevor dann zur Orientierung ein Recken des Folienschlauchs unterhalb der Kristallit-Schmelz-Temperatur erfolgt. Es resultiert dadurch eine Ausdünnung des Folienschlauches unter axialer Streckung der Molekülketten. Der Folienschlauch wird sodann schraubenlinienförmig aufgeschnitten. Es ergibt sich somit eine Flachbahn mit einer bezogen auf die Längsrichtung der Flachbahn diagonal verlaufenden monoaxialen Orientierung. Zur Bildung eines Kunststofffolienverbundes werden dann zwei Flachbahnen mit um 90° versetzter Orientierung miteinander verbunden, das heißt kaschiert. Das beschriebene Verfahren ist insgesamt relativ aufwendig. Auch die Gestaltungsmöglichkeiten im Hinblick auf eine zu bildende Kunststoffverpackung sind eingeschränkt, weil stets zwei gleich ausgeführte Lagen der monoaxial orientierten Polyethylen-Folie vorhanden sind.

Die WO 97/03822 A1 offenbart eine mehrschichtige Verbundfolie für Folienverpackungen aus einer ersten Folie A und einer zweiten Folie C, welche aus biaxial orientiertem Polyethylen-Copolymer gebildet und als Heißsiegelschicht vorgesehen ist. Beide Folien sind über eine Klebstoffschicht miteinander verbunden. Für die erste Folie A werden unterschiedliche Materialien vorgeschlagen.

Die DE 10 2011 001 336 A1 schlägt vor, eine Verbundfolie für Folienverpackungen im Hinblick auf die Recyclebarkeit lediglich aus Polyolefinen herzustellen, wobei verschiedene alternative Ausgestaltungen und Varianten offenbart werden. Schichten aus monoaxial orientiertem Material können zur Definierung einer Öffnungsrichtung und auch als Siegelmedium genutzt werden. Des Weiteren kann auch eine biaxial orientierte Schicht vorgesehen sein.

Die EP 2 100 724 A1 offenbart eine mehrschichtige, gedehnte Folie als Verschlussabschnitt für Papierverpackungen. Die Lagen können aus unterschiedlichen Materialien gebildet sein.

Vor diesem Hintergrund liegt der vorliegenden Erfindung die Aufgabe zugrunde, einen hochwertigen, leicht recycelbaren und in seinem Aufbau anpassbaren Kunststofffolienverbund für Folienverpackungen anzugeben. Des Weiteren sollen auch eine entsprechende Kunststoffverpackung, insbesondere ein Kunststoffverpackungsbeutel, und ein Verfahren zur Herstellung des Kunststofffolienverbundes angegeben werden.

Gegenstand der Erfindung und Lösung der Aufgabe sind ein Kunststofffolienverbund gemäß Patentanspruch 1, eine Kunststoffverpackung gemäß Patentanspruch 10 sowie ein Verfahren zur Herstellung eines Kunststoffverbundes gemäß Patentanspruch 11.

Ausgehend von einem gattungsgemäßen Kunststofffolienverbund für Folienverpackungen mit einer ersten Oberfläche und einer zweiten Oberfläche, einer monoaxial orientierten Polyethylen-Folie und mit einer Siegelschicht an der zweiten Oberfläche ist erfindungsgemäß eine biaxial orientierte Polyethylen-Folie vorgesehen.

Überraschenderweise können durch die Einbringung einer biaxial orientierten Polyethylen-Folie in den Kunststofffolienverbund die Reißfestigkeit, die Knickbeständigkeit und die Durchstoßfestigkeit sehr stark erhöht werden, selbst wenn die biaxial orientierte Polyethylen-Folie vergleichsweise dünn ausgeführt ist und somit zu der Gesamtdicke des Kunststofffolienverbundes wenig beiträgt.

Insbesondere ist die stabilisierende Wirkung der biaxial orientierten Polyethylen-Folie viel größer als die stabilisierende Wirkung einer unorientierten Polyethylen-Folie gleicher oder sogar erheblich größerer Dicke. Bei der biaxial orientierten Folie weisen die einzelnen Molekülketten keine klare Vorzugsrichtung auf und sind auch wie bei einer unorientierten Folie in verschiedenen Richtungen der Folienebene ausgerichtet. Durch die Orientierung liegen die einzelnen Polymerstränge jedoch weniger als Knäuel sondern mehr als langgezogene Stränge vor, wodurch insgesamt in beliebige Richtungen in der Ebene der biaxial orientierten Polyethylen-Folie eine relativ hohe Zugsteifigkeit erreicht wird. Folglich muss bei der Erzeugung des Kunststofffolienverbundes auch keine besondere Ausrichtung oder Anordnung der biaxial orientierten Polyethylen-Folie berücksichtigt werden.

Es kann angenommen werden, dass die besonders vorteilhafte stabilisierende Wirkung der biaxial orientierten Polyethylen-Folie wesentlich auch auf die hohe Zugsteifigkeit zurückgeführt werden kann.

Die monoaxial orientierte Polyethylen-Folie bildet gemäß einer bevorzugten Ausgestaltung die erste Oberfläche, welche dann bei einer Folienverpackung auch die Außenseite der Verpackung bildet. Die monoaxial orientierte Polyethylen-Folie zeichnet sich durch gute optische Eigenschaften sowie eine geringe Oberflächenrauigkeit aus.

Unabhängig von der konkreten Anordnung der monoaxial orientierten Polyethylen-Folie beträgt die Dicke typischerweise 10 µm und 70 µm, vorzugsweise zwischen 20 µm und 50 µm.

Wie bereits zuvor erläutert, kann die biaxial orientierte Polyethylen-Folie auch in Vergleich zu der monoaxial orientierten Polyethylen-Folie deutlich dünner ausgeführt sein, wobei dann dennoch die Durchstoßfestigkeit und die Knickbruchbeständigkeit des gesamten Kunststofffolienverbundes erheblich verbessert werden. Die Dicke der biaxial orientierten Polyethylen-Folie kann beispielsweise zwischen 10 µm und 40 µm, vorzugsweise zwischen 15 µm und 30 µm liegen.

Erfindungsgemäß ist vorgesehen, dass die monoaxial orientierte Polyethylen-Folie eine größere Dicke als die biaxial orientierte Polyethylen-Folie aufweist, wobei das Dickenverhältnis bevorzugt zumindest 3:2, besonders bevorzugt zumindest 2:1 beträgt. Die angegebenen Dickenverhältnisse von zumindest 3:2 und bevorzugt zumindest 2:1 können insbesondere dann vorgesehen sein, wenn die biaxial orientierte Polyethylen-Folie gemäß einer bevorzugten Ausgestaltung der Erfindung auf besonders einfache Weise als Mono-Folie einschichtig extrudiert ist. Auch bei einer mehrschichtigen, nachfolgend noch näher erörterten Coextrusion der biaxial orientierten Polyethylen-Folie können die angegebenen Verhältnisse erreicht werden.

Der erfindungsgemäße Kunststofffolienverbund umfasst zumindest die monoaxial orientierte Polyethylen-Folie sowie die biaxial orientierte Polyethylen-Folie, welche beispielsweise durch Klebstoff oder eine Extrusionskaschierung miteinander verbunden sein können. Es werden demnach also zwei Folien getrennt voneinander extrudiert und nachfolgend monoaxial bzw. biaxial orientiert, bevor der Kunststofffolienverbund gebildet wird. Dabei ist es möglich, dass die Siegelschicht an der zweiten Oberfläche von der biaxial orientierten Polyethylen-Folie gebildet ist, welche durch eine entsprechende Formulierung der Inhaltsstoffe trotz der biaxialen Orientierung auch gut siegelbar ausgestaltet sein kann.

Wenn gemäß der beschriebenen Variante der Erfindung die Siegelschicht an der zweiten Oberfläche von der biaxial orientierten Polyethylen-Folie gebildet ist, so ist diese biaxial orientierte Polyethylen-Folie besonders bevorzugt coextrudiert, um dann die Siegelschicht mit besonders guten Siegeleigenschaften hinsichtlich der Aufschmelzbarkeit, der Verbundhaftung und anderen Siegelparametern auszurüsten. Neben entsprechenden Zugaben können auch Polyethylen-Typen ausgewählt werden, welche trotz der biaxialen Orientierung besonders gut siegelbar sind. Geeignet sind beispielsweise Polyethylen niedriger Dichte (LDPE), lineares Polyethylen niedriger Dichte (LLPDE) und Polyethylen sehr niedriger Dichte (VLDPE), wobei auch mit Metallocen-Katalysatoren gewonnene Typen sowie Polyethylen-Copolymere in Betracht kommen. Bei Polyethylen sehr niedriger Dichte (VLDPE) sind insbesondere Typen mit plastomeren Eigenschaften geeignet, die typischerweise eine Dichte zwischen 0,886 bis 0,915 g/cm³ aufweisen. Bezüglich der typischen Eigenschaften von Polyethylenen und der Zuordnung der verschiedenen Dichtebereiche wird insbesondere auf "Saechtling Kunststoff Taschenbuch", 31. Auflage, Carl Hanser Verlag, München 2013, Seiten 432 ff. verwiesen.

Erfindungsgemäß sind sowohl die monoaxial orientierte Polyethylen-Folie als auch die biaxial orientierte Polyethylen-Folie auf der Basis von Polyethylen gebildet. Darunter ist zu verstehen, dass ein Polyethylen, ein Polyethylen-Copolymer oder ein Polyethylen-Blend den Hauptbestandteil der jeweiligen Folie bildet, wobei jedoch selbstverständlich übliche Zusatz- und Füllstoffe vorgesehen sein können. Sämtliche den Kunststofffolienverbund bildenden Folien bestehen gemäß einer bevorzugten Ausgestaltung der Erfindung zumindest zu 80 Gew.-%, besonders bevorzugt zumindest aus 90 Gew.-% und beispielsweise zumindest zu 95 Gew.% aus Polyethylen.

Gemäß einem weiteren Aspekt der vorliegenden Erfindung ist vorgesehen, dass die biaxial orientierte Polyethylen-Folie zwischen der monoaxial orientierten Polyethylen-Folie und einer separaten, die Siegelschicht bildenden Siegelfolie angeordnet ist. Die Siegelfolie ist bevorzugt als ein- oder mehrschichtige Blasfolie gebildet und kann typischerweise eine Dicke zwischen 25 µm und 90 µm aufweisen. Im Rahmen einer solchen Ausgestaltung ist die dann als eine Art Kernschicht vorgesehene biaxial orientierte Polyethylen-Folie vorzugsweise als einfache Mono-Folie ausgeführt.

Um bei der monoaxial orientierten Polyethylen-Folie und/oder der biaxial orientierten Polyethylen-Folie ein hohes Reckverhältnis zu erreichen ist die Bildung der entsprechenden Folie durch Flachfolienextrusion bevorzugt, wobei grundsätzlich aber auch eine Blasfolienextrusion in Betracht kommt. Im Hinblick auf eine monoaxiale Orientierung kann bei einer Flachfolie ohne weiteres ein Reckverhältnis zwischen 1:8 und 1:12 erreicht werden, während für Blasfolien üblicherweise ein geringeres Reckverhältnis von beispielsweise zwischen 1:3 und 1:8 gewählt wird.

Im Hinblick auf eine einfache Herstellung ist eine Orientierung insbesondere in Maschinenrichtung vorgesehen, wobei dann die kalte oder allenfalls warme Folie unterhalb der Kristallit-Schmelz-Temperatur über unterschiedlich schnell angetriebene Walzen geführt und somit in Maschinenrichtung, das heißt in Längsrichtung der Materialbahn verstreckt wird. Sofern dabei kein Schlupf auftritt, ergibt sich das Reckverhältnis aus der Bahngeschwindigkeit an der Oberfläche der jeweiligen Walzen, wobei die Orientierung ohne weiteres auch in mehrere Stufen erfolgen kann.

Für die biaxiale Orientierung sind verschiedene Verfahren bekannt. So kann beispielsweise eine zweistufige biaxiale Verstreckung erfolgen, bei der in einem Arbeitsschritt in der beschriebenen Weise durch unterschiedliche schnell drehende Walzen eine Streckung in Längsrichtung erfolgt und nachfolgend dann eine Dehnung in Querrichtung durch einen entsprechenden Reckrahmen möglich ist. Bekannte Reckrahmen weisen umlaufende Ketten auf, welche die Folie randseitig greifen und dann V-förmig in Querrichtung aufweiten.

Schließlich kann eine biaxiale Orientierung auch durch ein Simultanstrecken mit einem Scherengittersystem erfolgen, wobei dann die einzelnen randseitigen Festhaltepunkte der Folie sowohl in Querrichtung als auch in Längsrichtung voneinander wegbewegt werden. Die beschriebenen Maßnahmen zur monoaxialen und biaxialen Orientierung sind jedoch lediglich exemplarisch.

Sofern eine separate Siegelfolie vorgesehen ist, weist diese bevorzugt keine monoaxiale oder biaxiale Orientierung auf. Geeignet sind insbesondere einfache Blasfolien, die durch Blasfolienextrusion kostengünstig hergestellt werden können.

Wie bereits zuvor erläutert, können die den Kunststoffverbund bildenden Folien durch Klebstoff und/oder Extrusionskaschierung verbunden sein. Als Klebstoff kommen insbesondere Klebstoffe auf der Basis von Polyurethan in Betracht, welche sowohl lösemittelfrei als auch lösemittelhaltig sowie als Zweikomponenten-Systeme verfügbar sind.

Um eine erhöhte Verbundhaftung zu erreichen, kann auch eine zumindest einschichtige Extrusionskaschierung auf der Basis von Polyethylen vorgesehen sein. Die Schichtdicke einer solchen Extrusionskaschierung liegt typischerweise bei mehr als 5 µm, besonders bevorzugt mehr als 10 µm. Die Schichtdicke kann insbesondere zwischen 12 µm und 28 µm betragen, wobei im Hinblick auf die angrenzenden Folien auch eine zweischichtige Extrusionskaschierung zweckmäßig sein kann, um eine optimale Anbindung an die jeweils angrenzende Folie bzw. angrenzende Schicht zu erreichen.

Überraschenderweise kann durch eine solche Extrusionskaschierung auch die Belastbarkeit des Kunststofffolienverbundes an Siegelnähten gegen ein unkontrolliertes Aufplatzen bzw. Aufreißen erhöht werden.

Die Gesamtdicke des Kunststofffolienverbundes liegt typischerweise zwischen 40 µm und 200 µm, besonders bevorzugt zwischen 60 µm und 140 µm.

Der Kunststofffolienverbund kann also aus genau drei vorgefertigten Folien gebildet, wenn eine separate Siegelfolie vorgesehen ist. Ansonsten wird der Kunststofffolienverbund bevorzugt aus genau zwei vorgefertigten Folien, nämlich der monoaxial orientierten Polyethylen-Folie und der biaxial orientierten Polyethylen-Folie gebildet.

Je nach Anwendungszweck ist zu berücksichtigen, dass Folien auf der Basis von Polyethylen und somit auch die monoaxial orientierte Polyethylen-Folie sowie die biaxial orientierte Polyethylen-Folie eine gute Barrierewirkung gegenüber Wasserdampf aufweisen. Andererseits ist die Barrierewirkung gegenüber Sauerstoff und aromatischen Verbindungen relativ gering, so dass für viele Anwendungen eine zusätzliche Barriere zweckmäßig ist. Hierzu kann auf einer der Folien des Kunststofffolienverbundes und besonders bevorzugt auf der biaxial orientierten Polyethylen-Folie eine Barrierebeschichtung vorgesehen sein. Geeignet sind beispielsweise eine PVOH-Beschichtung, eine SiOx-Bedampfung oder auch eine Metallisierung. Entsprechende Schichten sind sehr dünn, so dass ein Recycling in der Regel nur wenig beeinträchtigt wird.

Darüber hinaus können auch dünne Barriereschichten in den Kunststofffolienverbund eingebracht werden. Wenn beispielsweise eine separate Siegelfolie vorgesehen ist, kann diese bei einer mehrschichtigen Coextrusion auch eine Schicht insbesondere Kernschicht aus einem Barrierematerial, beispielsweise EVOH, aufweisen. Entsprechende Blasfolien können insbesondere (bevorzugt symmetrisch) fünf Schichten aufweisen, wobei dann die Barriereschicht als mittige Kernschicht vorgesehen ist. Dabei ist es zweckmäßig, die Barriereschicht sehr dünn mit einer Dicke von beispielsweise 1 bis 5 µm auszuführen. Insbesondere das zuvor als bevorzugt genannte Ethylen-Vinylalkohol-Copolymer (EVOH oder EVHL) kann mit einer solchen geringen Schichtdicke gebildet werden. Darüber hinaus handelt es sich um ein Ethylen-Copolymer mit einem Ethylen-Anteil von typischer 62 bis 73 %. Auch aus diesem Grund können geringe Mengen von EVOH in einem Recyclat in vielen Fällen akzeptiert werden.

Gegenstand der Erfindung ist auch eine Kunststoffverpackung, insbesondere ein Kunststoffbeutel, mit einem aus dem zuvor beschriebenen Kunststofffolienverbund gebildeten Beutelkörper. Der Beutelkörper kann beispielsweise durch Falten und Siegeln aus einem Abschnitt des Kunststofffolienverbundes oder auch aus mehreren Abschnitten des Kunststofffolienverbundes geformt sein.

Wenn lediglich zwei Zuschnitte des Kunststofffolienverbundes randseitig zu einem kissenförmigen Beutel verbunden werden, ist ein Falten nicht notwendig. Unabhängig von der konkreten Form des Beutelkörpers ist jedoch stets zumindest eine Siegelung, insbesondere zumindest eine Heißsiegelnaht vorgesehen, weshalb der Kunststofffolienverbund an der zweiten Oberfläche die Siegelschicht aufweist.

Neben der bereits beschriebenen einfachen Kissenform kann der Beutelkörper auch als Standbeutel, als Seitenfaltenbeutel oder dergleichen ausgeführt sein.

Schließlich kann der Kunststoffbeutel auch weitere Einrichtungen wie beispielsweise einen Ausgießer, einen Wiederverschluss und einen Teilgriff aufweisen. Gerade bei solchen zusätzlichen Einrichtungen können lokal erhöhte Kräfte auf den Beutelkörper wirken, so dass auch dann die erfindungsgemäß durch die Kombination der monoaxial orientierten Polyethylen-Folie mit der biaxial orientierten Polyethylen-Folie erreichte Stabilisierung von besonderem Vorteil ist.

Aufgrund der hohen Durchstoßfestigkeit und Knickbruchbeständigkeit ist die Kunststoffverpackung auch für flüssige, schwere und in einem gewissen Maße scharfkantige Füllgüter geeignet. Als Füllgut kommen beispielsweise verschiedene Flüssigkeiten wie Flüssigwaschmittel, Getränke, Spülmittel, Haushaltschemikalien, flüssige Lebensmittel und ähnliches in Betracht. Neben verschiedenen festen und/oder körnigen Lebensmitteln können auch Waschpulver, Waschmitteltabs und dergleichen als Füllgut vorgesehen sein. Schließlich kann durch die hohe Durchstoßfestigkeit und Knickbruchbeständigkeit auch eine in gewissem Maße kindersichere Verpackung von Medikamenten oder anderen gefährlichen Substanzen erreicht werden.

Gegenstand der Erfindung ist schließlich auch ein Verfahren zur Herstellung eines Kunststofffolienverbundes, wobei eine erste Polyethylen-Folie insbesondere als Flachfolie, extrudiert und in einem nachfolgenden Verfahrensschritt monoaxial orientiert wird, wobei eine zweite Polyethylen-Folie, insbesondere als Flachfolie, extrudiert und in einem nachfolgenden Verfahrensschritt biaxial orientiert wird und wobei die monoaxial orientierte Polyethylen-Folie und die biaxial orientierte Polyethylen-Folie - gegebenenfalls mit weiteren vorgefertigten Folien - miteinander kaschiert werden.

Gemäß einer Weiterbildung des erfindungsgemäßen Verfahrens wird eine dritte Polyethylen-Folie insbesondere als Blasfolie extrudiert und nicht mit einer Orientierung versehen. Bei der Kaschierung wird dann die biaxial orientierte Polyethylen-Folie zwischen der monoaxial orientierten Polyethylen-Folie und der als Siegelfolie vorgesehenen dritten Polyethylen-Folie angeordnet.

Bezüglich der weiteren Merkmale der erfindungsgemäßen Kunststoffverpackung sowie des Verfahrens zur Herstellung des Kunststofffolienverbundes wird auf die obigen Erläuterungen des Kunststofffolienverbundes selbst verwiesen.

Die Erfindung wird im Folgenden anhand von Figuren erläutert. Es zeigen:
- Fig. 1: einen Kunststofffolienverbund gemäß dem Stand der Technik,
- Fig. 2: einen erfindungsgemäßen Kunststofffolienverbund,
- Fig. 3: eine alternative Ausgestaltung des erfindungsgemäßen Kunststofffolienverbundes.

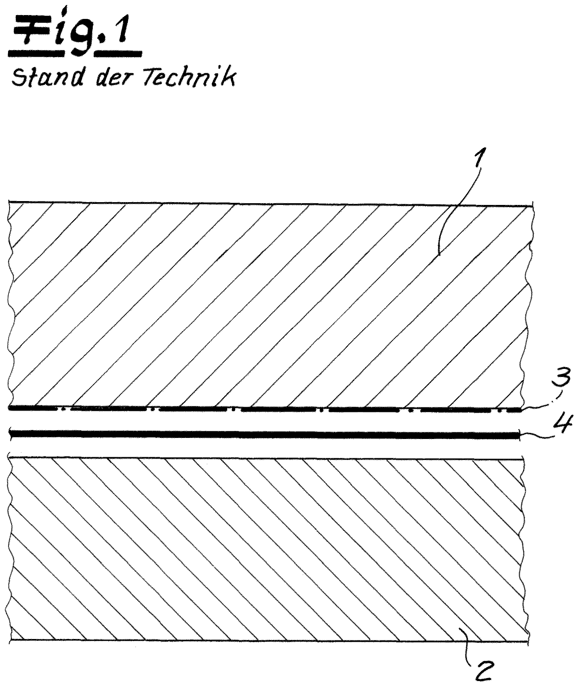

Die Fig. 1 zeigt einen Kunststofffolienverbund gemäß dem Stand der Technik. Der Kunststofffolienverbund weist eine monoaxial orientierte Polyethylen-Folie 1, welche eine erste Oberfläche des Kunststofffolienverbundes bildet. An einer gegenüberliegenden zweiten Oberfläche des Kunststofffolienverbundes ist eine Siegelschicht von einer Siegelfolie 2 auf der Basis von Polyethylen gebildet.

Während die erste Oberfläche mit der dort angeordneten monoaxial orientierten Polyethylen-Folie 1 bei einer Kunststoffverpackung üblicherweise die Außenseite bildet, ist die zweite von der Siegelfolie 2 gebildete Oberfläche an einer Innenseite der Folienverpackung einen Verpackungsinnenraum zugewandt, wobei durch die Siegelfolie die Bildung eines Beutelkörpers durch Heißsiegelnähte möglich ist.

Die Siegelfolie kann ohne Einschränkung ein- oder mehrschichtig sein, wobei zum Zwecke der einfachen Darstellung nur die Siegelfolie 2 als Ganzes ohne eine spezielle Schichtenfolge dargestellt ist.

Die monoaxial orientierte Polyethylen-Folie 1 zeichnet sich durch ein hochwertiges Erscheinungsbild aus und ist an ihrer der Siegelfolie zugewandten Seite mit einem Aufdruck 3 versehen, der durch die innenliegende Anordnung gegenüber einem Abrieb geschützt ist (Konterdruckt). Grundsätzlich kommt auch die Anordnung des Aufdruckes an der ersten Oberfläche des Kunststofffolienverbundes in Betracht (Schöndruck).

Gemäß der Fig. 1 sind die monoaxial orientierte Polyethylen-Folie 1 und die vorzugsweise als Blasfolie gebildete Siegelfolie 2 unmittelbar miteinander kaschiert, wobei hierzu beispielsweise ein Polyurethan-Klebstoff in Betracht kommt. In dem dargestellten Ausführungsbeispiel beträgt die Dicke der monoaxial orientierten Polyethylen-Folie 1 beispielsweise 50 µm und die Dicke der Siegelfolie 2 beispielsweise 45 µm. Typische Flächengewichte für den Aufdruck 3 sind beispielsweise 3 g/m² und für den Klebstoff 4 2 g/m².

Eine aus dem Kunststofffolienverbund gemäß dem Stand der Technik gebildete Kunststoffverpackung weist nur eine begrenzte mechanische Belastbarkeit und insbesondere eine geringe Durchstoßfestigkeit und eine geringe Knickbruchbeständigkeit auf.

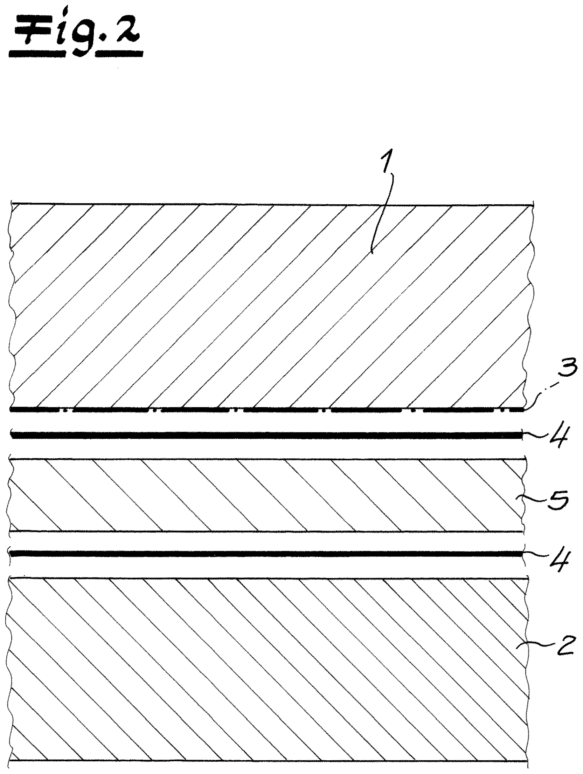

Die Fig. 2 zeigt eine mögliche Ausgestaltung eines erfindungsgemäßen Kunststofffolienverbundes, bei dem zwischen der monoaxial orientierten Polyethylen-Folie 1 sowie der Siegelfolie 2 als weitere vorgefertigte Folie eine biaxial orientierte Polyethylen-Folie 5 angeordnet ist. Entsprechend ist bei einer ansonsten übereinstimmenden Ausgestaltung eine weitere Schicht aus Klebstoff 4 notwendig. In dem dargestellten Ausführungsbeispiel kann die Dicke der biaxial orientierten Polyethylen-Folie 5 beispielsweise 18 µm betragen.

Obwohl die biaxial orientierte Polyethylen-Folie somit vergleichsweise dünn ist, ergibt sich eine erhebliche Verbesserung der Durchstoßfestigkeit und der Knickbruchbeständigkeit des gesamten Kunststofffolienverbundes. Bei der in der Fig. 2 dargestellten Ausgestaltung ist die biaxial orientierte Polyethylen-Folie 5 vorzugsweise als Monofolie gebildet, wobei grundsätzlich aber auch mehrschichtige Ausgestaltungen in Betracht kommen.

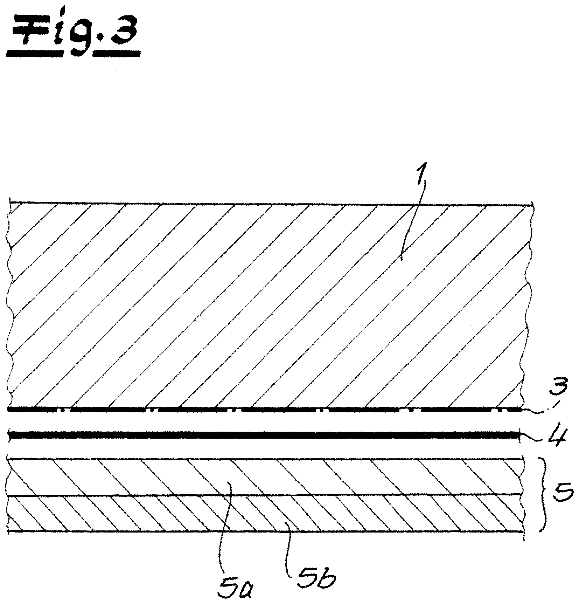

Schließlich zeigt die Fig. 3 eine weitere Variante des erfindungsgemäßen Kunststofffolienverbundes für Folienverpackungen, wobei die monoaxial orientierte Polyethylen-Folie 1 wie zuvor angeordnet und ausgestaltet ist. Allerdings wird auf eine separate Siegelfolie 2 verzichtet, so dass der Kunststofffolienverbund lediglich aus der vorgefertigten monoaxial orientierten Polyethylen-Folie 1 sowie der vorgefertigten biaxial orientierten Polyethylen-Folie 5 mit dem dazwischen angeordneten Aufdruck 3 und Klebstoff 4 gebildet ist.

Um eine gute Heißsiegelbarkeit zu erreichen, kann die biaxial orientierte Polyethylen-Folie 5 mehrschichtig ausgestaltet sein. Bei der exemplarisch dargestellten zweischichtigen Ausgestaltung liegt eine Schicht 5a der biaxial orientierten Polyethylen-Folie 5 an dem Klebstoff 4 an, während eine weitere Schicht 5b der biaxial orientierten Polyethylen-Folie 5 die Siegelschicht bildet.

Durch die rein exemplarisch dargestellte zweischichtige Ausgestaltung soll lediglich verdeutlicht werden, dass bei der biaxial orientierten Polyethylen-Folie 5 durch die Aufteilung in mehrere Schichten 5a, 5b eine Optimierung und auch eine gewisse funktionelle Aufteilung erreicht werden können. Entgegen der lediglich exemplarischen zweischichtigen Ausgestaltung sind in der Praxis insbesondere durch Coextrusion gebildete biaxial orientierte Polyethylen-Folien geeignet, welche zumindest dreischichtig sind. Insbesondere kann bei einer ungeraden Anzahl an Schichten auch ein symmetrischer Schichtaufbau gewählt werden, wodurch im Hinblick auf die biaxial orientierte Polyethylen-Folie 5 als auch den insgesamt gebildeten Kunststofffolienverbund unerwünschte Spannungen und auch eine Rollneigung vermieden werden können.

Auch gemäß der in Fig. 3 dargestellten Ausführung kann die biaxial orientierte Polyethylen-Folie 5 eine Dicke von beispielsweise 18 µm aufweisen. Im Vergleich zu der Ausgestaltung gemäß dem Stand der Technik nach Fig. 1 resultiert insgesamt also eine deutlich geringere Dicke des gesamten Kunststofffolienverbundes, wobei dennoch die Durchstoßfestigkeit und die Knickbruchbeständigkeit stark erhöht werden.

Die in den Figuren 2 und 3 dargestellten Ausgestaltungen sind lediglich exemplarisch, wobei selbstverständlich auch weitere Abwandlungen und Alternativen möglich sind. Beispielsweise kann vorgesehen sein, dass zur Erzeugung der Siegelschicht Polyethylen schmelzflüssig auf die biaxial orientierte Polyethylen-Folie 5 aufextrudiert wird. Eine solche Extrusions-Beschichtung durch Polyethylen kann grundsätzlich vor oder nach der Kaschierung der biaxial orientierten Polyethylen-Folie 5 mit der monoaxial orientierten Polyethylen-Folie 1 erfolgen. Wenn in der beschriebenen Weise die Siegelschicht von einer Lage aufextrudiertem Polyethylen gebildet ist, kann die biaxial orientierte Polyethylen-Folie 5 vorzugsweise als einschichtige Mono-Folie ausgeführt sein (vgl. Fig. 2).

In einem orientierenden Versuch wurde die Durchstoßfestigkeit entsprechend ASTM 3420-08a des Kunststofffolienverbundes gemäß der Fig. 1 und gemäß der Fig. 3 verglichen. Die Durchstoßfestigkeit wurde dabei von der zweiten Oberfläche in Richtung der ersten Oberfläche geprüft. Bei dem Kunststofffolienverbund gemäß der Fig. 1 ergibt sich dabei im Rahmen der orientierenden Versuche eine Durchstoßfestigkeit von 12,6 Newton (N), während die Durchstoßfestigkeit für den Kunststofffolienverbund gemäß der Fig. 3 außerhalb des vorgegebenen Messbereichs bis 38 N (das heißt größer) ist.

Aufgrund der überraschend hohen Durchstoßfestigkeit ist der erfindungsgemäße Kunststofffolienverbund auch für Verpackungsanwendungen geeignet, bei denen aufgrund pharmazeutischer oder anderer aggressiver und/oder toxisch relevanter Inhaltsstoffe eine erhöhte Sicherheit gegen ein versehentliches Öffnen zweckmäßig ist. Der Kunststofffolienverbund ist somit auch für Medikamente, feste oder flüssige Haushaltsreiniger sowie andere aggressiv und/oder giftige Chemikalien geeignet. Es können beispielsweise Verpackungsbeutel und Blisterverpackungen gebildet werden. Der Kunststofffolienverbund kann auch als Deckelfolie bei einem insbesondere durch Tiefziehen gebildeten Behälter eingesetzt werden. Bei einem solchen Behälter stellt der Deckel häufig eine potentielle Schwachstelle dar, weshalb gerade dort eine erhöhte Festigkeit und insbesondere erhöhte Durchstoßfestigkeit besonders vorteilhaft sind.

## Patentansprüche

1. Kunststofffolienverbund für Folienverpackungen mit einer ersten Oberfläche und einer zweiten Oberfläche, einer monoaxial orientierten Polyethylen-Folie (1) und mit einer Siegelschicht an der zweiten Oberfläche, und einer biaxial orientierten Polyethylen-Folie (5), wobei die monoaxial orientierte Polyethylen-Folie (1) eine größere Dicke als die biaxial orientierte Polyethylen-Folie (5) aufweist.

2. Kunststofffolienverbund nach Anspruch 1, **dadurch gekennzeichnet, dass** die monoaxial orientierte Polyethylen-Folie (1) die erste Oberfläche bildet.

3. Kunststofffolienverbund nach Anspruch 1 oder 2, **dadurch gekennzeichnet, dass** das Dickenverhältnis bevorzugt zumindest 3:2, besonders bevorzugt zumindest 2:1, beträgt.

4. Kunststofffolienverbund nach einem der Ansprüche 1 bis 3, **dadurch gekennzeichnet, dass** die Dicke der monoaxial orientierten Polyethylen-Folie (1) zwischen 10 µm und 70 µm beträgt.

5. Kunststofffolienverbund nach einem der Ansprüche 1 bis 4, **dadurch gekennzeichnet, dass** die Dicke der biaxial orientierten Polyethylen-Folie (5) zwischen 10 µm und 40 µm beträgt.

6. Kunststofffolienverbund nach einem der Ansprüche 1 bis 5, **dadurch gekennzeichnet, dass** die Siegelschicht an der zweiten Oberfläche von der biaxial orientierten Polyethylen-Folie (5) gebildet ist.

7. Kunststofffolienverbund nach einem der Ansprüche 1 bis 5, **dadurch gekennzeichnet, dass** die biaxial orientierte Polyethylen-Folie (5) zwischen der monoaxial orientierten Polyethylen-Folie (1) und einer separaten, die Siegelschicht bildenden Siegelfolie (2) angeordnet ist.

8. Kunststofffolienverbund nach einem der Ansprüche 1 bis 7, **dadurch gekennzeichnet, dass** die monoaxial orientierte Polyethylen-Folie (1) und/oder die biaxial orientierte Polyethylen-Folie (5) durch Flachfolienextrusion gebildet sind/ist.

9. Kunststofffolienverbund nach einem der Ansprüche 1 bis 8, **dadurch gekennzeichnet, dass** die den Kunststofffolienverbund bildenden Folien durch Klebstoff (4) und/oder durch Extrusionskaschierung verbunden sind.

10. Kunststoffverpackung, insbesondere Kunststoffverpackungsbeutel, mit einem aus einem Kunststoffverbund nach einem der Ansprüche 1 bis 9 gebildeten Beutelkörper, wobei die erste Oberfläche des Kunststofffolienverbundes eine Außenseite und die zweite Oberfläche des Kunststofffolienverbundes eine einem Verpackungsinnenraum zugewandte Innenseite bilden.

11. Verfahren zur Herstellung eines Kunststofffolienverbundes nach einem der Ansprüche 1 bis 9,
a) wobei eine erste Polyethylen-Folie, insbesondere als Flachfolie, extrudiert und in einem nachfolgenden Verfahrensschritt monoaxial orientiert wird,
b) wobei eine zweite Polyethylen-Folie, insbesondere als Flachfolie, extrudiert und in einem nachfolgenden Verfahrensschritt biaxial orientiert wird und
c) wobei die monoaxial orientierte Polyethylen-Folie (1) und die biaxial orientierte Polyethylen-Folie (5) miteinander kaschiert werden.

12. Verfahren nach Anspruch 11, wobei eine dritte Polyethylen-Folie, insbesondere als Blasfolie extrudiert wird und wobei bei der Kaschierung die biaxial orientierte Polyethylen-Folie (5) zwischen der monoaxial orientierten Polyethylen-Folie (1) und der als Siegelfolie (2) vorgesehenen dritten Polyethylen-Folie angeordnet wird.

13. Verfahren nach Anspruch 11, wobei zur Erzeugung der Siegelschicht Polyethylen auf die biaxial orientierte Polyethylen-Folie (5) aufextrudiert wird.

## Claims

1. A plastic film composite for film packaging with a first surface and a second surface, a monoaxially oriented polyethylene film (1), and with a sealing layer at the second surface, and a biaxially oriented polyethylene film (5), wherein the monoaxially oriented polyethylene film (1) has a greater thickness than the biaxially oriented polyethylene film (5).

2. The plastic film composite according to claim 1, **characterised in that** the monoaxially oriented polyethylene film (1) forms the first surface.

3. The plastic film composite according to claim 1 or 2, **characterised in that** the thickness ratio is preferably at least 3:2, particularly preferably at least 2:1.

4. The plastic film composite according to any one of claims 1 to 3, **characterised in that** the thickness of the monoaxially oriented polyethylene film (1) is between 10 um and 70 µm.

5. The plastic film composite according to any one of claims 1 to 4, **characterised in that** the thickness of the biaxially oriented polyethylene film (5) is between 10 um and 40 µm.

6. The plastic film composite according to any one of claims 1 to 5, **characterised in that** the sealing layer at the second surface is formed by the biaxially oriented polyethylene film (5).

7. The plastic film composite according to any one of claims 1 to 5, **characterised in that** the biaxially oriented polyethylene film (5) is arranged between the monoaxially oriented polyethylene film (1) and a separate sealing film (2) forming the sealing layer.

8. The plastic film composite according to any one of claims 1 to 7, **characterised in that** the monoaxially oriented polyethylene film (1) and/or the biaxially oriented polyethylene film (5) is/are formed by flat film extrusion.

9. The plastic film composite according to any one of claims 1 to 8, **characterised in that** the films forming the plastic film composite are joined by adhesive (4) and/or by extrusion lamination.

10. A plastic packaging, particularly a plastic packaging bag, with a bag body formed from a plastic composite according to any one of claims 1 to 9, wherein the first surface of the plastic film composite forms an outer side, and the second surface of the plastic film composite forms an inner side facing a packaging interior.

11. A method for producing a plastic film composite according to any one of claims 1 to 9,
a) wherein a first polyethylene film is extruded, in particular as a flat film, and is monoaxially oriented in a subsequent method step,
b) wherein a second polyethylene film is extruded, in particular as a flat film, and is biaxially oriented in a subsequent method step, and
c) wherein the monoaxially oriented polyethylene film (1) and the biaxially oriented polyethylene film (5) are laminated together.

12. The method according to claim 11, wherein a third polyethylene film is extruded, in particular as a blown film, and wherein, during the lamination, the biaxially oriented polyethylene film (5) is arranged between the monoaxially oriented polyethylene film (1) and the third polyethylene film provided as sealing film (2).

13. The method according to claim 11, wherein polyethylene is extruded on the biaxially oriented polyethylene film (5) to generate the sealing layer.

## Revendications

1. Composite de matière plastique pour emballage en film comportant une première surface et une seconde surface, un film de polyéthylène à orientation monoaxiale (1) et une couche d'étanchéité sur la seconde surface, et un film de polyéthylène à orientation biaxiale (5), le film de polyéthylène à orientation monoaxiale (1) présentant une épaisseur plus élevée que le film de polyéthylène à orientation biaxiale (5).

2. Composite de matière plastique selon la revendication 1, **caractérisé en ce que** le film de polyéthylène à orientation monoaxiale (1) constitue la première surface.

3. Composite de matière plastique selon la revendication 1 ou 2, **caractérisé en ce que** le rapport d'épaisseur s'élève de préférence à au moins 3:2, très préférentiellement au moins 2:1.

4. Composite de matière plastique selon une des revendications 1 à 3, **caractérisé en ce que** l'épaisseur du film de polyéthylène à orientation monoaxiale (1) est de 10 µm à 70 µm.

5. Composite de matière plastique selon une des revendications 1 à 4, **caractérisé en ce que** l'épaisseur du film de polyéthylène à orientation biaxiale (5) est de 10 µm à 40 µm.

6. Composite de matière plastique selon une des revendications 1 à 5, **caractérisé en ce que** la couche d'étanchéité est formée sur la seconde surface du film de polyéthylène à orientation biaxiale (5).

7. Composite de matière plastique selon une des revendications 1 à 5, **caractérisé en ce que** le film de polyéthylène à orientation biaxiale (5) est disposé entre le film de polyéthylène à orientation monoaxiale (1) et un film d'étanchéité séparé (2) constituant la couche d'étanchéité.

8. Composite de matière plastique selon une des revendications 1 à 7, **caractérisé en ce que** le film de polyéthylène à orientation monoaxiale (1) et/ou le film de polyéthylène à orientation biaxiale (5) sont constitués par extrusion de film plat.

9. Composite de matière plastique selon une des revendications 1 à 8, **caractérisé en ce que** les films constituant le composé de matière plastique sont raccordés par de la colle (4) et/ou par contrecollage par extrusion.

10. Emballage en matière plastique, en particulier sachet d'emballage en matière plastique, comportant un corps de sachet composite formé de matière plastique selon une des revendications 1 à 9, dans lequel la première surface du composite de matière plastique forme une face extérieure et la seconde surface du composite de matière plastique une face intérieure tournée vers l'intérieur de l'emballage.

11. Procédé de fabrication d'un composite de matière plastique selon une des revendications 1 à 9, dans lequel
a) un premier film de polyéthylène, se présentant en particulier sous forme d'un film plat, est extrudé et orienté de manière monoaxiale dans une étape opératoire suivante,
b) un deuxième film de polyéthylène, se présentant en particulier sous forme d'un film plat, est extrudé et orienté de manière biaxiale dans une étape opératoire suivante et
c) le film de polyéthylène à orientation monoaxiale (1) et le film de polyéthylène orienté de manière biaxiale (5) sont contrecollés l'un avec l'autre.

12. Procédé selon la revendication 11, dans lequel un troisième film de polyéthylène, se présentant en particulier sous forme d'un film soufflé, est extrudé et, lors du contrecollage, le film de polyéthylène orienté de manière biaxiale (5) est disposé entre le film de polyéthylène à orientation monoaxiale (1) et le troisième film de polyéthylène prévu sous forme d'un film d'étanchéité (2).

13. Procédé selon la revendication 11, dans lequel, pour créer la couche d'étanchéité, du polyéthylène est extrudé sur le film de polyéthylène orienté de manière biaxiale (5).
